# EUROPÄISCHE PATENTANMELDUNG

(11) **EP 4 838 259 A1**
(43) Veröffentlichungstag der Anmeldung: **11.11.2026**
(21) Anmeldenummer: 25174792.9
(22) Anmeldetag: 07.05.2025
(51) Int. Cl.: G01S 7/527, G01S 15/931

(54) **VERFAHREN UND VORRICHTUNG ZUR ERKENNUNG EINES OBJEKTS IN EINEM NAHFELD EINES ULTRASCHALLTRANSDUCERS**

(71) Anmelder: Elmos Semiconductor SE, 51379 Leverkusen (DE)
(72) Erfinder: Dr.-Ing. Spiegel, Egbert, 45770 Marl (DE)
(74) Vertreter: dompatent

(57) **Zusammenfassung**

Die Erfindung betrifft ein Verfahren zur Erkennung eines Objekts in einem Nahfeld eines Ultraschalltransducer, insbesondere als Einparkhilfe für ein Fahrzeug, mit den Schritten: Zyklische Messwerterfassung, wobei jede Messwerterfassung umfasst: Aussenden eines Ultraschallsignals durch einen Ultraschalltransducer in einen zu überwachenden Erfassungsbereich; Empfangen eines von einem Objekt im Erfassungsbereich reflektierten Ultraschallsignals durch den Ultraschalltransducer als Ultraschall-Empfangssignal und Bestimmen einer Phasenableitung des Ultraschall-Empfangssignals zumindest für einen Nahfeldbereich des Ultraschalltransducers. Weiterhin umfasst das Verfahren den Schritt: Vergleichen der Phasenableitung für den Nahfeldbereich mit einer Phasenableitung eines vorhergehenden Zyklus, wobei auf Grundlage des Vergleichs auf ein Objekt im Nahfeld des Ultraschalltransducer geschlossen wird.

## Beschreibung

Die vorliegende Erfindung betrifft ein Verfahren zur Erkennung eines Objekts in einem Nahfeld eines Ultraschalltransducers, insbesondere als Einparkhilfe für ein Fahrzeug. Ferner betrifft die vorliegende Erfindung eine Vorrichtung zur Implementierung eines solchen Verfahrens sowie ein System mit mindestens einem Ultraschalltransducer und einer solchen Vorrichtung.

Die Erkennung eines Hindernisses im Umfeld insbesondere eines Fahrzeugs mit Hilfe der Analyse eines empfangenen Echosignals von zuvor ausgesendeten Ultraschallwellen ist grundsätzlich bekannt. Derartige Verfahren haben sich bei automobilen Anwendungen als beispielsweise Einparkhilfe bewährt.

Bei solchen Verfahren wird üblicherweise ein Ultraschalltransducer verwendet, der angeregt wird zum Aussenden eines Ultraschallsignals in den zu überwachenden Erfassungsbereich. Das Ultraschallsignal wird sodann von einem Hindernis im Erfassungsbereich reflektiert und gelangt hierdurch zurück zu dem Ultraschalltransducer. Durch das reflektierte Ultraschallempfangssignal wird sodann der Ultraschalltransducer angeregt, wobei die Anregung des Ultraschalltransducers als Messsignal herangezogen wird zur Erkennung des Hindernisses im Erfassungsbereich.

Insbesondere bei sehr nahen Hindernissen, die sich in geringem Abstand zu dem Ultraschalltransducer befinden, kann das reflektierte Ultraschallempfangssignal noch während der Anregung des Ultraschalltransducers zur Erzeugung des ursprünglich ausgesendeten Ultraschallsignals oder während einer Abklingzeit zurück zu dem Ultraschalltransducers gelangen, in der die Vibration/Schwingung des Ultraschalltransducers zur Erzeugung des Ultraschallsignals nach Ende der Anregung ausschwingt bzw. abklingt. Somit überlagert sich die Schwingung des Ultraschalltransducers durch die aktive Anregung bzw. der abklingenden Vibration nach dem Ende der Anregung und das reflektierte Ultraschallempfangssignal, so dass eine Erfassung des Ultraschallempfangssignals und somit eine Erkennung des Hindernisses bisher nicht oder nur schwer möglich ist.

Aufgabe der Erfindung ist es ein Verfahren zur Erfassung eines Hindernisses bzw. Objekts im Nahfeld eines Ultraschalltransducers bereitzustellen.

Die Aufgabe wird gelöst gemäß einem Verfahren zur Erkennung eines Objekts in einem Nahfeld eines Ultraschalltransducers gemäß Anspruch 1, einer Vorrichtung gemäß Anspruch 11 sowie einem System gemäß Anspruch 12.

Gemäß der vorliegenden Erfindung wird ein Verfahren zur Erkennung eines Objekts bzw. Hindernisses in einem Nahfeld eines Ultraschalltransducers, insbesondere als Einparkhilfe für ein Fahrzeug bereitgestellt. Das Verfahren umfasst die Schritte:
- Zyklische Messwerterfassung, wobei jede Messwerterfassung umfasst:
   - Aussenden eines Ultraschallsignals durch einen Ultraschalltransducer in einen zu überwachenden Erfassungsbereich,
   - Empfangen eines von einem Objekt oder Hindernis im Erfassungsbereich reflektierten Ultraschallsignals durch den Ultraschalltransducer als Ultraschall-Empfangssignal,
   - Bestimmen einer Phasenableitung des Ultraschall-Empfangssignals zumindest für einen Nahfeldbereich des Ultraschalltransducers.

Erfindungsgemäß wird nachfolgend ein Vergleich der Phasenableitung, also der Ableitung der Phase des Ultraschall-Empfangssignals, für den Nahfeldbereich mit einer Phasenableitung eines vorhergehenden Zyklus durchgeführt, wobei auf Grundlage des Vergleichs auf ein Objekt im Nahfeld des Ultraschalltransducers geschlossen wird. Somit weist das vorliegende Verfahren mindestens zwei Messwerterfassungen auf, wobei in jeder Messwerterfassung ein Ultraschallsignal ausgesendet wird und ein Ultraschallempfangssignal von dem Ultraschalltransducer empfangen wird. Insbesondere erfolgt eine kontinuierliche Messwerterfassung, so dass beispielsweise wenn bei einer Bewegung des Fahrzeugs ein Objekt in das Nahfeld des Ultraschalltransducers gelangt, dieses erfasst werden kann. Nach dem Ende der Anregung des Ultraschalltransducers schwingt dieser für eine gewisse Zeit nach. Diese Zeit wird als Abklingbereich oder Ausschwingbereich bezeichnet und dauert üblicherweise einige hundert Mikrosekunden und insbesondere weniger als 1.5ms. Insbesondere dauert der Abklingbereich zwischen 300µs und 800µs.. Im Abklingbereich des Ultraschalltransducers ist dieser weiterhin aufgrund der abklingenden Anregung in Bewegung. Befindet sich somit ein Hindernis im Nahfeld des Ultraschalltransducers, gelangt das Ultraschallsignal aufgrund der geringen Laufzeit innerhalb kürzester Zeit zum Ultraschalltransducer zurück, so dass sich die Anregung des Ultraschalltransducers durch das reflektierte Ultraschallsignal mit der abklingenden Bewegung des Ultraschalltransducers überlagert. Hierbei wird die abklingende Schwingung des Ultraschalltransducers aufgrund des reflektierten Ultraschallsignals, welches durch den Ultraschalltransducer empfangen wird, gestört. Dies führt zu einer Änderung der Schwingung/Vibration, welche durch die Phasenableitung und den Vergleich der Phasenableitung zwischen zwei aufeinanderfolgenden Zyklen ermittelt werden kann. Liegt somit ein Hindernis im Nahfeld des Ultraschalltransducers vor, ändert sich das Ausschwingverhalten des Ultraschalltransducers, was sich in als Unterschied der Phasenableitung des Ultraschallsignals zweier aufeinanderfolgender Zyklen erfassen lässt. Somit kann durch den Vergleich der Phasenableitung für den Nahfeldbereich mit einer Phasenableitung eines vorhergehenden Zyklus auf ein Hindernis im Nahfeld des Ultraschalltransducers geschlossen werden. Hierbei hat sich gezeigt, dass durch die Verwendung der Phasenableitung ein besonders robustes System geschaffen wird und sich die Phasenableitungen aufeinanderfolgender Zyklen auf einfache Weise vergleichen lassen. Insbesondere wird kein statischer Grenzwert für die Änderung der Phasenableitung verwendet. Äußere Einflüsse, wie beispielsweise die Temperatur oder dergleichen, welche einen Einfluss auf das Schwingungsverhalten des Ultraschalltransducers haben, haben somit gerade keinen Einfluss auf die Erkennung des Objekts im Nahfeld des Ultraschalltransducers, da diese Einflüsse in jedem der aufeinanderfolgenden Messzyklen vorliegen.

Vorzugsweise wird die Phasenableitung zumindest für den Nahfeldbereich des Ultraschalltransducers bestimmt. Alternativ hierzu wird die Phasenableitung für das gesamte Ultraschall-Empfangssignal bestimmt.

Vorzugsweise umfasst der Nahfeldbereich zumindest teilweise ein Abklingbereich des Ultraschalltransducers. Der Nahfeldbereich des Ultraschalltransducers ist somit der zeitliche Bereich des Ultraschall-Empfangssignals, in dem der Ultraschalltransducer angeregt wird zur Erzeugung des Ultraschallsignals bzw. dessen Anregung abklingt. In diesem Nahfeldbereich kann üblicherweise durch den Ultraschalltransducer kein Ultraschallsignal empfangen werden. Erst die Betrachtung der Phasenableitung und der Vergleich der Phasenableitung führt diesen Nahfeldbereich mit einer Phasenableitung eines vorhergehenden Zyklus ermöglicht die Erkennung eines Objekts im Nahfeld des Ultraschalltransducers.

Vorzugsweise wird ein Auffüllsignal auf das Ultraschall-Empfangssignal addiert vor der Bestimmung der Phasenableitung. Insbesondere zum Ende des Abklingbereichs des Ultraschalltransducers nimmt das Ultraschall-Empfangssignal schnell ab und wird klein, so dass eine zuverlässige Bestimmung der Phasenableitung gerade in diesem Bereich nicht mehr möglich ist. Durch das Auffüllsignal wird somit das Ultraschallempfangssignal wieder aufgefüllt, so dass eine zuverlässige Bestimmung der jeweiligen Phasenableitung möglich ist und für einen Vergleich mit der Phasenableitung eines vorhergehenden Zyklus herangezogen werden kann.

Vorzugweise erfolgt das Hinzuaddieren des Auffüllsignals im Basisband. Insbesondere kann das Auffüllsignal hierbei als Konstante auf das Ultraschallempfangssignal addiert werden.

Insbesondere ist eine Phase des Auffüllsignals gewählt mit 45° bzw. *e*^{*iπ*/4}, so dass insbesondere bei der Verwendung des IQ-Signals, I und Q gleichmäßig ausgesteuert werden.

Vorzugsweise entspricht das Auffüllsignal einem Sättigungssignal abzüglich der Maximalamplitude des Ultraschall-Empfangssignals. Somit wird das Auffüllsignal anhand der jeweiligen Amplitude des Ultraschallempfangssignal gesteuert. Das Sättigungssignal entspricht dabei der Maximalen in dem jeweiligen Signalpfad verarbeitbaren Amplitude und ist durch die in dem Signalverlauf verwendeten Elektronik gegeben. Insbesondere wird das Sättigungssignal vorgegeben durch den Analog-Digital-Wandler, mittels dem das erfasste Ultraschall-Empfangssignal in ein digitales Signal umgewandelt wird. Insbesondere entspricht dabei das Sättigungssignal einer negativen Hüllkurve des Ultraschallempfangssignals.

Vorzugsweise wird im Nahfeldbereich des Ultraschalltransducers ein Auswertefenster definiert, wobei die Phasenableitung in dem Auswertefenster ermittelt wird. Insbesondere wird die Phasenableitung nur in dem Auswertefenster ermittelt. Somit kann die Bestimmung der Phasenableitung auf das Auswertefenster beschränkt werden, sodass die Bestimmung der Phasenableitung auf den relevanten Bereich des Ultraschall-Empfangssignals beschränkt werden kann. Es reicht somit aus, dass das Ultraschall-Empfangssignal im Auswertefenster zwischengespeichert und ausgewertet wird. Dadurch kann die erforderliche Rechenleistung reduziert werden. Ebenfalls wird hiermit sichergestellt, dass der Vergleich der Phasenableitungen nicht beeinflusst ist von einem Echosignal im Fernfeldbereich des Ultraschall-Empfangssignals. Weiterhin ist ein Zwischenspeichern des gesamten Ultraschall-Empfangssignals nicht erforderlich und ein entsprechender Speicher braucht nicht vorgesehen zu werden.

Vorzugsweise umfasst das Auswertefenster einen zeitlichen Bereich von 1ms bis 2.5ms und insbesondere 1.5ms und 2ms.

Vorzugsweise wird die Position und Breite des Auswertefensters in Abhängigkeit von einem oder mehreren der Ausschwingzeit des Ultraschalltransducers, der Temperatur, dem Anregungsstroms des Ultraschalltransducers, der Resonatorgüte des Ultraschalltransducers, der Anregungsfrequenz des Ultraschalltransducers, der Anzahl von Pulsen der Anregung des Ultraschalltransducers und der Anregungsdauer des Ultraschalltransducers gewählt. Insbesondere kann dabei das Auswertefenster mit der Anregung des Ultraschalltransducers beginnen. Vorzugsweise beginnt das Auswertefenster mit dem Ende der Anregung des Ultraschalltransducers, also mit dem Beginn des Abklingbereichs des Ultraschalltransducers. Vorzugsweise endet das Auswertefenster nach Ende des Abklingbereichs des Ultraschalltransducers. Somit richtet sich insbesondere die Position und die Breite des Auswertefensters nach dem Abklingbereich, der durch die vorstehend genannten Parameter beeinflusst werden kann.

Vorzugsweise wird die Phasenableitung ermittelt von den IQ-Werten des Ultraschall-Empfangssignals. Insbesondere wird die Phasenableitung *φ'*(*n*) bestimmt mit *φ'*(*n*) = *I*(*n* - 1) · (*Q*(*n* - 2)) - *Q*(*n*)) - *Q*(*n* - 1) · (*I*(*n* - 2)) - *I*(*n*))*,* wobei n einen diskreten Zeitschritt, I die In-Phase-Werte und Q die Quadraturwerte des Ultraschall-Empfangssignals bezeichnet. Somit handelt es sich bei der Phasenableitung *φ'*(*n*) insbesondere um eine Näherung, welche in Echtzeit bzw. zeitaktuell, d.h. in einem Schritt mit der Zwischenspeicherung von nur wenigen diskreten Werten des Ultraschallempfangssignals, auf einfache Weise berechnet werden kann.

Vorzugsweise wird in jeder zyklischen Messwerterfassung aus dem Ultraschallempfangssignal eine Hüllkurve bestimmt. Anhand der Hüllkurve kann beispielsweise im Fernfeldbereich des Ultraschall-Empfangssignals ein Echosignal detektiert werden, so dass auf ein Objekt im Fernfeld des Ultraschalltransducers geschlossen werden kann.

Vorzugsweise umfasst das Vergleichen der Phasenableitung für den Nahfeldbereich mit einer Phasenableitung eines vorhergehenden Zyklus: Bestimmen einer Differenz zwischen den Phasenableitungen und wenn die Differenz größer ist als ein vorgegebener Grenzwert, schließen auf ein Hindernis im Nahfeld des Ultraschalltransducers. Ist somit der Unterschied zwischen den erfassten Phasenableitungen größer als der vorgegebene Grenzwert, so kann auf ein Hindernis im Erfassungsbereich im Nahfeld des Ultraschalltransducers geschlossen werden.

Vorzugsweise wird auch die Erfassung eines Hindernisses im Nahfeld des Ultraschalltransducers zyklisch durchgeführt und insbesondere zusammen mit jeder zyklischen Messwerterfassung, so dass nach der zweiten zyklischen Messwerterfassung kontinuierlich eine Überwachung des Nahfelds des Ultraschalltransducers vorgenommen werden kann.

Vorzugsweise handelt es sich bei dem vorhergehenden Zyklus um den unmittelbar vorhergehenden Zyklus. Alternativ hierzu kann auch ein davorliegender Zyklus verwendet werden für den Vergleich.

Vorzugsweise können die Phasenableitungen von mehr als einem vorhergehenden Zyklus berücksichtigt werden, wobei beispielsweise eine Mittelung über die für die jeweiligen Zyklen ermittelten Phasenableitungen berechnet wird und herangezogen wird für den Vergleich mit dem aktuellen Messzyklus.

Vorzugsweise wird bei Erfassung eines Objekts im Nahfeld des Ultraschalltransducers bzw. bei setzten des Flag diese Information an einen Benutzer weitergegeben beispielsweise über ein Warnsignal. Dabei kann es sich bei dem Warnsignal um ein optisches Warnsignal beispielsweise auf einer Anzeige handeln. Alternativ oder zusätzlich hierzu handelt es sich um ein optisches Warnsignal und/oder ein haptisches Warnsignal.

In einem weiteren Aspekt der vorliegenden Erfindung wird eine Vorrichtung bereitgestellt, welche insbesondere ausgebildet ist als mikroelektronische Schaltung. Die Vorrichtung ist ausgebildet zur Verbindung mit mindestens einem Ultraschalltransducer. Die Vorrichtung weist eine Speichereinheit auf und einen Prozessor, wobei die Speichereinheit Instruktionen speichert, die, wenn vom Prozessor ausgeführt, die Schritte des vorstehend beschriebenen Verfahrens ausführt.

Vorzugsweise handelt es sich bei der mikroelektronischen Schaltung um einen integrierten Schaltkreis, oder einen anwendungsangepassten integrierten Schaltkreis (ASIC - Application Specific Integrated Circuit) oder einen FPGA oder dergleichen.

In einem weiteren Aspekt der vorliegenden Erfindung wird ein System bereitgestellt mit einer Vorrichtung wie vorstehend beschrieben und mindestens einem Ultraschalltransducer, welcher mit der Vorrichtung verbunden ist. Nachfolgend wird die Erfindung anhand bevorzugter Ausführungsformen unter Bezugnahme auf die beigefügten Figuren näher erläutert.

Nachfolgend wird die Erfindung anhand bevorzugter Ausführungsformen unter Bezugnahme auf die beigefügten Figuren näher erläutert.

Die Figuren zeigen:
- Fig. 1: ein schematisches Ablaufdiagramm einer ersten Ausführungsform der vorliegenden Erfindung,
- Fig. 2: ein schematisches Ablaufdiagramm einer zweiten Ausführungsform der vorliegenden Erfindung,
- Fig. 3: ein Diagramm des Verfahrens gemäß der vorliegenden Erfindung,
- Fig. 4: eine exemplarische Implementierung des Verfahrens der vorliegenden Erfindung,
- Fig. 5: ein exemplarisches Auffüllsignal,
- Fig. 6: ein exemplarisches Phasenableitungsdiagramm,
- Fig. 7: eine exemplarische Implementierung des Vergleichs der Phasenableitungen,
- Fig. 8: eine exemplarische Messung, und
- Fig. 9: eine Vorrichtung gemäß der vorliegenden Erfindung.

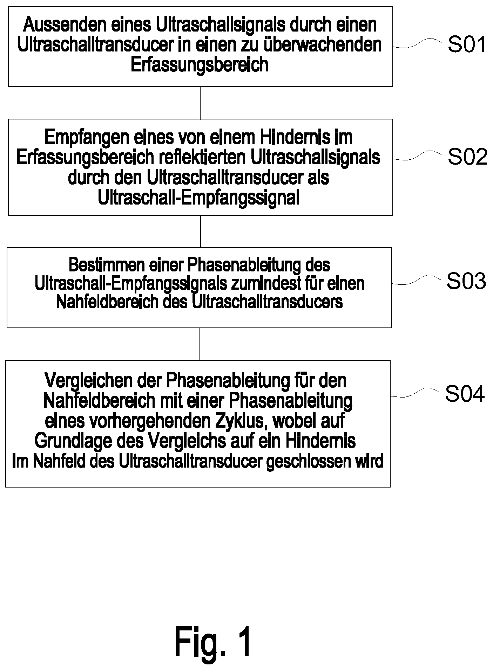

Nachfolgend wird Bezug genommen auf die Fig. 1. Fig. 1 zeigt die Schritte eines Verfahrens zur Erkennung eines Objekts bzw. Hindernisses in einem Nahfeld eines Ultraschalltransducers gemäß der vorliegenden Erfindung in einer ersten Ausführungsform. Das Verfahren umfasst eine zyklische Messwerterfassung, wobei jede Messwerterfassung umfasst:
In Schritt S01 wird ein Ultraschallsignal durch einen Ultraschalltransducer ausgesendet in einen zu überwachenden Erfassungsbereich.

In Schritt S02 wird ein von einem Hindernis im Erfassungsbereich reflektierten Ultraschallsignals durch den Ultraschalltransducer empfangen als Ultraschall-Empfangssignal.

In Schritt S03 wird eine Phasenableitung des Ultraschall-Empfangssignals bestimmt zumindest für einen Nahfeldbereich des Ultraschalltransducers.

Insbesondere werden die Schritte S01 bis S03 zyklisch hintereinander ausgeführt.

Weiterhin umfasst das Verfahren in Schritt S04 den Vergleichen der Phasenableitung für den Nahfeldbereich mit einer Phasenableitung eines vorhergehenden Zyklus, wobei auf Grundlage des Vergleichs auf ein Objekt bzw. Hindernis im Nahfeld des Ultraschalltransducer geschlossen wird.

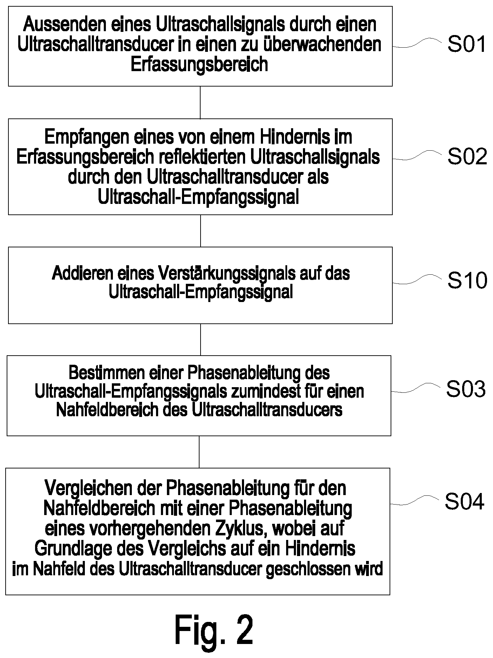

Nachfolgend wird Bezug genommen auf die Fig. 2. Fig. 2 zeigt eine weitere Ausführungsform des erfindungsgemäßen Verfahrens, wobei insbesondere die Schritte S01 bis S04 den Schritten der Fig. 1 entsprechen. Zusätzlich wird jedoch vor der Bestimmung der Phasenableitung in Schritt S03 ein Auffüllsignal auf das Ultraschallempfangssignal addiert gemäß Schritt S10. Insbesondere zum Ende der Anregung des Ultraschalltransducers bzw. dem Ende des Abklingbereichs des Ultraschalltransducers im Übergang in den Fernfeldbereich des Ultraschall-Empfangssignals wird das Ultraschall-Empfangssignal klein, so dass eine Phasenableitung nicht oder nicht mehr zuverlässig bestimmt werden kann und die Bestimmung der Phasenableitung von Rauschen gestört wird. Somit wird gemäß Schritt S10 ein Auffüllsignal auf das Ultraschall-Empfangssignal addiert, um das Ultraschall-Empfangssignal aufzufüllen und eine zuverlässige Bestimmung der jeweiligen Phasenableitung zu ermöglichen. Hierbei bestimmt sich die Größe des Auffüllsignals insbesondere anhand der Amplitude des Ultraschall-Empfangssignals. Insbesondere wird das Auffüllsignal bestimmt durch ein Sättigungssignal abzüglich der Maximalamplitude des Ultraschall-Empfangssignals bzw. der Einhüllenden des Ultraschall-Empfangssignals.

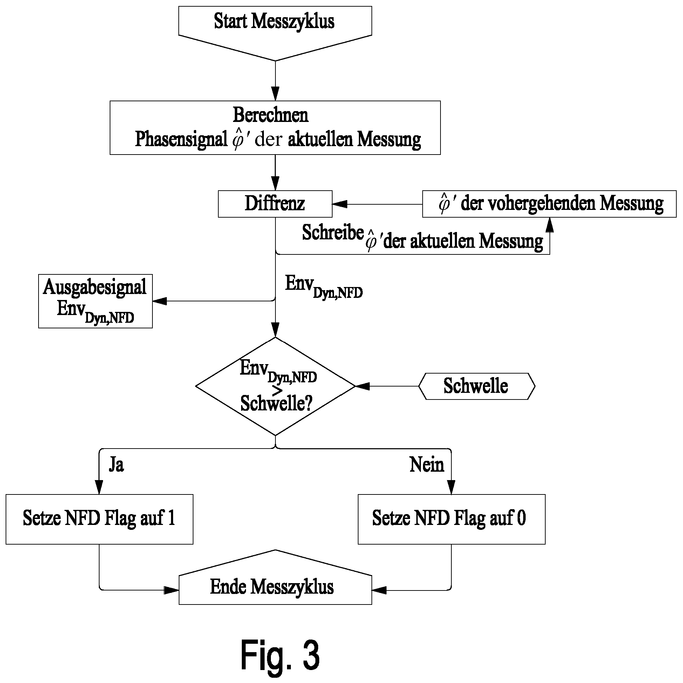

Nachfolgend wird Bezug genommen auf das Ablaufdiagramm der Fig. 3. Zunächst wird eine Messung gestartet. In dieser aktuellen Messung wird eine Phasenableitung φ̂'*_{c}* der aktuellen Messung ("current") und insbesondere des aktuellen Ultraschall-Empfangssignals berechnet. Nachfolgend wird die Differenz zwischen der Phasenableitung φ̂'*_{c}* mit der Phasenableitung φ̂'*ₚ* einer vorhergehenden Messung ("previous") bestimmt und die Phasenableitung φ̂'*_{c}* der aktuellen Messung gespeichert für einen nachfolgenden Messzyklus. Das Ergebnis der Differenz zwischen den Phasenableitungen φ̂'*_{c}* und φ̂'*ₚ* wird in der Fig. 3 als Env_{Dyn,NFD} bezeichnet. Dies kann beispielsweise verwendet werden für weitere Auswertung. Alternativ oder zusätzlich hierzu erfolgt ein Vergleich mit einem vorgegebenen Grenzwert bzw. Schwelle. Ist dabei die Differenz größer als die vorgegebene Schwelle, wird eine NFD Flag gesetzt auf 1, welche ein Objekt im Nahfeld des Ultraschalltransducers anzeigt. Ist die Differenz kleiner als die Schwelle, wird die NFD Flag auf 0 gesetzt bzw. auf 0 gelassen, wobei hierdurch angezeigt wird, dass kein Objekt im Nahfeld des Ultraschalltransducers detektiert wurde. Das NFD Flag kann hierbei insbesondere herangezogen werden, um ein Warnsignal für den Benutzer zu generieren, dass sich ein Objekt im Nahfeld des Ultraschalltransducers befindet. Das Verfahren gelangt zum Ende des Messzyklus und ein neuer Messzyklus kann gestartet werden.

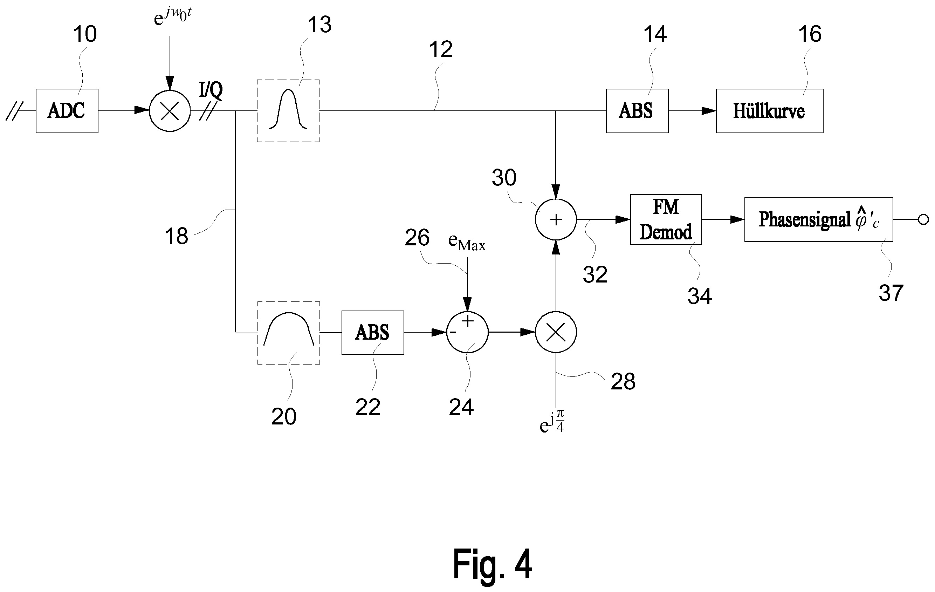

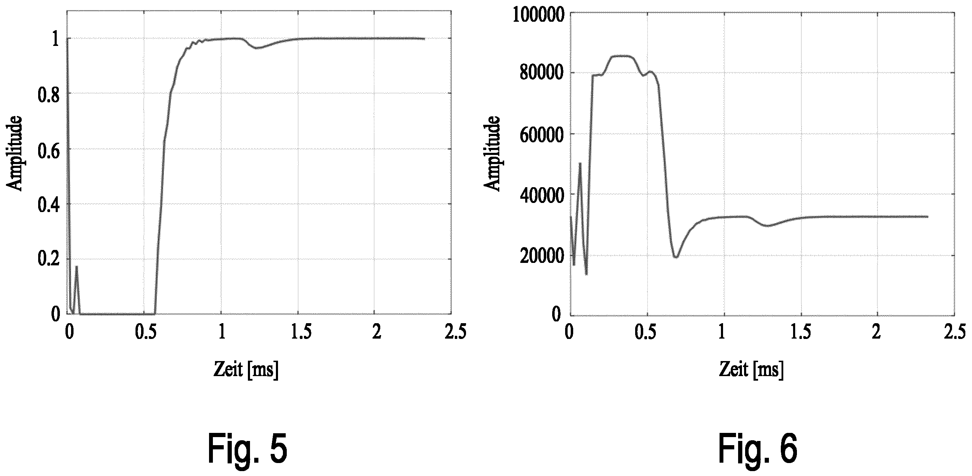

Nachfolgend wird Bezug genommen auf die Fig. 4. Fig. 4 zeigt eine mögliche Implementierung eines Signalpfads gemäß der vorliegenden Erfindung. Das vom Ultraschalltransducer empfangene Signal wird mittels eines Analog-DigitalWandlers 10 in ein digitales Signal umgewandelt und nachfolgend ins Basisband verschoben. In einem ersten Signalpfad 12 kann ein Filter 13 vorgesehen sein. Nachfolgend wird der Absolutwert 14 des IQ-Signals bestimmt, um eine Hüllkurve 16 zu ermitteln. Mittels der Hüllkurve kann sodann beispielsweise eine Fernfelddetektion erfolgen. In einem zweiten Signalpfad 18 wird ein Auffüllsignal bestimmt. In dem zweiten Signalpfad kann wiederum ein Filter 20 vorgesehen sein. Nachfolgend wird erneut der Absolutwert 22 bestimmt zur Bestimmung der Amplituden des Ultraschall-Empfangssignals. Sodann wird ein Sättigungssignal 26 bereitgestellt, von dem die Amplitude des Ultraschall-Empfangssignals abgezogen wird 24. Ein Beispiel für ein Auffüllsignal ist gezeigt in der Fig. 5. Das Auffüllsignal wird zu dem Ultraschall-Empfangssignal des ersten Signalpfades 12 hinzuaddiert 30. Durch das Auffüllsignal wird das kleiner werdende Ultraschall-Empfangssignal insbesondere nach dem Ende des Abklingbereichs verstärkt und wieder aufgefüllt. Insbesondere erfolgt die Addition im Basisband, so dass das Auffüllsignal als Konstante aufaddiert werden kann. Hierbei wird das Auffüllsignal mit einer Phase 28 von 45° gleichmäßig auf die I- und Q-Anteile verteilt. Das Summensignal 32 ist dabei exemplarisch in der Fig. 6 dargestellt. Nachfolgend erfolgt die Bestimmung der Phasenableitung 34. Hierzu wird insbesondere die Gleichung $φ ′ \left(n\right) = I \left(n-1\right) ⋅ \left(Q\left(n-2\right)\right) - Q \left.\left(n\right)\right) - Q \left(n-1\right) ⋅ \left(I\left(n-2\right)\right) - I \left.\left(n\right)\right) ,$ verwendet, zur Erzeugung eines Phasensignals φ̂'*_{c}* 37.

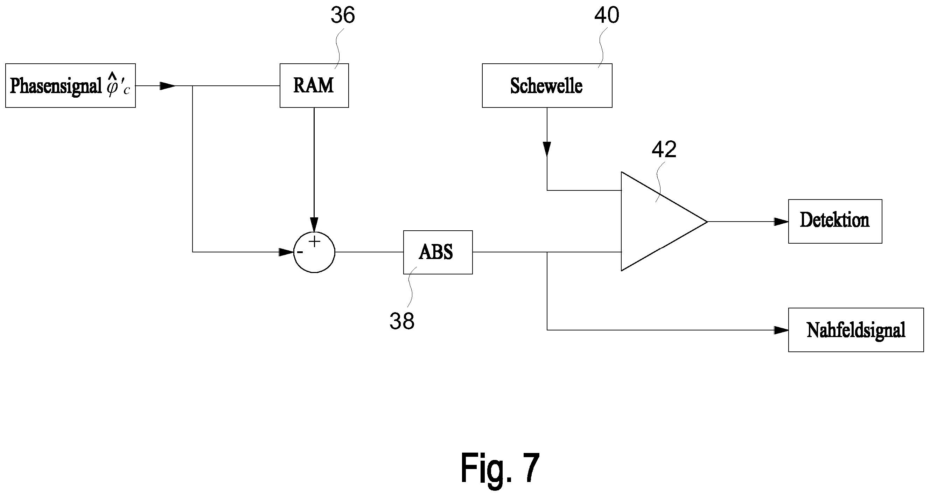

Gemäß der Fig. 7 wird das Phasensignal φ̂'*_{c}* subtrahiert von einem Phasensignal φ̂'*ₚ* aus einem Speicher 36. Nachfolgend wird der Absolutwert 38 gebildet und mit einer Schwelle 40 in einem Komparator 42 verglichen. Ist dabei die Differenz größer als die vorgegebene Schwelle, wird auf ein Objekt im Nahfeld des Ultraschalltransducers geschlossen. Alternativ oder zusätzlich hierzu kann das Nahfeldsignal 44 für eine weitere Auswertung verwendet werden. Insbesondere kann über das Nahfeldsignal 44 der Ort des Objekts innerhalb des Nahfeldbereichs bestimmt werden. Insbesondere kann hierbei das Maximum der Differenz herangezogen werden als Abstand des Objekts zum Ultraschalltransducer. Alternativ hierzu kann der Zeitpunkt, zu dem die Differenz das erste Mal den Schwellwert überschreitet, herangezogen werden zur Bestimmung des Abstands des Objekts vom Ultraschalltransducer.

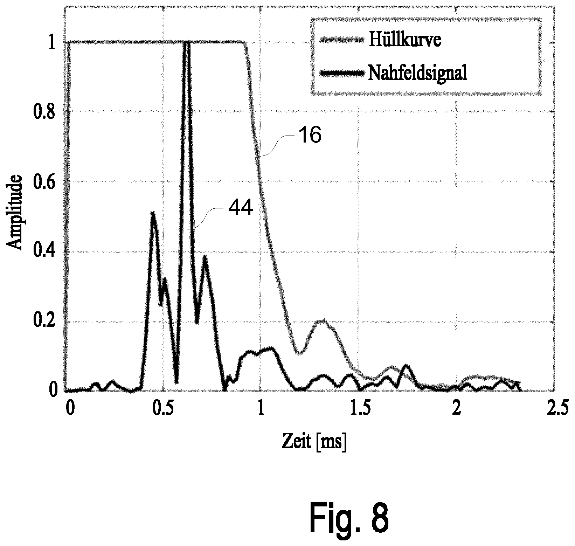

Fig. 8 zeigt eine exemplarische Messung mit einer Hüllkurve 16, welche gemäß dem exemplarischen ersten Signalpfad 12 der Fig. 4 ermittelt wurde. Hierbei ist zu sehen, dass kein Echosignal innerhalb des Sättigungsbereichs der Hüllkurve erkennbar ist, so dass anhand der Hüllkurve 16 nicht unmittelbar auf ein Objekt im Nahfeldbereich geschlossen werden kann. Weiterhin ist in der Fig. 8 das Nahfeldsignal 44 dargestellt. Anhand des Nahfeldsignals 44 ist klar ersichtlich, dass ein Objekt innerhalb des Nahfeldbereichs vorliegt. Insbesondere kann anhand des Maximums des Nahfeldsignals 44 auf den Ort bzw. den Abstand des Objekts zum Ultraschalltransducer geschlossen werden.

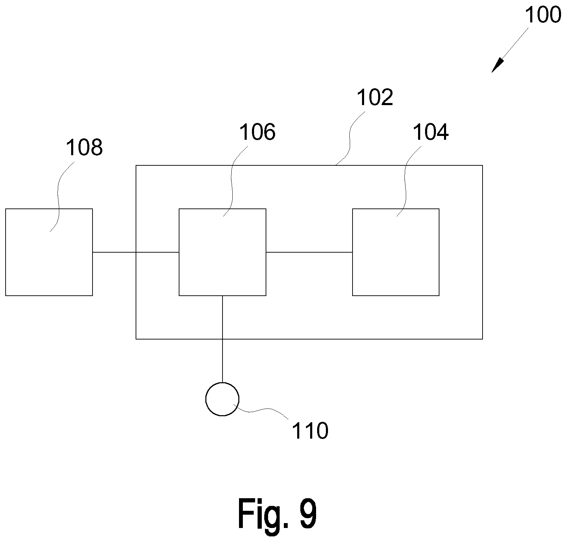

Nachfolgend wird Bezug genommen auf die Fig. 9. Figur 9 zeigt ein System 100 mit einer Vorrichtung 102. Die Vorrichtung 102 weist eine Speichereinrichtung 104 auf sowie einen Prozessor 106 auf. Die Vorrichtung 102 ist mit einem Ultraschalltransducer 108 verbunden. Selbstverständlich können mehr als ein Ultraschalltransducer 108 vorgesehen sein. In der Speichereinheit 104 sind dabei Instruktionen gespeichert die, wenn von dem Prozessor 106 ausgeführt werden, die Schritte des vorstehend beschriebenen Verfahrens durchführen. Insbesondere ist die Vorrichtung 102 mittelbar oder unmittelbar mit einer Signaleinrichtung 110 verbunden, wobei bei Detektion eines Objekts im Nahfeld des Ultraschalltransducers 108 ein Warnsignal mittels der Signaleinrichtung 110 erzeugt werden kann.

## Patentansprüche

1. Verfahren zur Erkennung eines Objekts in einem Nahfeld eines Ultraschalltransducer, insbesondere als Einparkhilfe für ein Fahrzeug, mit den Schritten:
- Zyklische Messwerterfassung, wobei jede Messwerterfassung umfasst:
- Aussenden eines Ultraschallsignals durch einen Ultraschalltransducer in einen zu überwachenden Erfassungsbereich,
- Empfangen eines von einem Objekt im Erfassungsbereich reflektierten Ultraschallsignals durch den Ultraschalltransducer als Ultraschall-Empfangssignal,
- Bestimmen einer Phasenableitung des Ultraschall-Empfangssignals zumindest für einen Nahfeldbereich des Ultraschalltransducers,
wobei das Verfahren weiter den Schritt umfasst:
- Vergleichen der Phasenableitung für den Nahfeldbereich mit einer Phasenableitung eines vorhergehenden Zyklus, wobei auf Grundlage des Vergleichs auf ein Objekt im Nahfeld des Ultraschalltransducer geschlossen wird.

2. Verfahren nach Anspruch 1, wobei der Nahfeldbereich zumindest teilweise ein Abklingbereich des Ultraschalltransducers umfasst.

3. Verfahren nach Anspruch 1 oder 2, wobei ein Auffüllsignal auf das Ultraschall-Empfangssignal addiert wird vor der Bestimmung der Phasenableitung.

4. Verfahren nach Anspruch 3, wobei das Auffüllsignal einem Sättigungssignal abzüglich der Maximalamplituden des Ultraschall-Empfangssignals entspricht.

5. Verfahren nach einem der Ansprüche 1 bis 4, wobei im Nahfeldbereich des Ultraschalltransducers ein Auswertefenster definiert wird, wobei der Vergleich nur in dem Auswertefenster ermittelt wird.

6. Verfahren nach Anspruch 5, wobei Position und Breite des Auswertefensters gewählt werden in Abhängigkeit eines oder mehrere der Ausschwingzeit des Ultraschalltransducers, der Temperatur, dem Anregungsstrom des Ultraschalltransducers, der Resonatorgüte des Ultraschalltransducers, der Anregungsfrequenz des Ultraschalltransducers, der Anzahl von Pulsen der Anregung, der Anregungsdauer des Ultraschalltransducers.

7. Verfahren nach einem der Ansprüche 1 bis 6, wobei die Phasenableitung ermittelt wird anhand von IQ-Werten des Ultraschall-Empfangssignals.

8. Verfahren nach Anspruch 7, wobei die Phasenableitung *φ'*(*n*) bestimmt wird mit $φ ′ \left(n\right) = I \left(n-1\right) ⋅ \left(Q\left(n-2\right)\right) - Q \left.\left(n\right)\right) - Q \left(n-1\right) ⋅ \left(I\left(n-2\right)\right) - I \left.\left(n\right)\right) ,$ wobei n einen diskreten Zeitschritt, I die In-Phase-Werte und Q die Quadraturwerte des Ultraschall-Empfangssignals bezeichnet.

9. Verfahren nach einem der Ansprüche 1 bis 8, wobei in jeder zyklischen Messwerterfassung aus dem Ultraschall-Empfangssignal eine Hüllkurve bestimmt wird.

10. Verfahren nach einem der Ansprüche 1 bis 9, wobei Vergleichen der Phasenableitung für den Nahfeldbereich mit einer Phasenableitung eines vorhergehenden Zyklus umfasst: Bestimmen einer Differenz zwischen den Phasenableitungen und wenn die Differenz größer ist als ein vorgegebener Grenzwert, schließen auf ein Hindernis im Nahfeld des Ultraschalltransducers.

11. Vorrichtung, insbesondere mikroelektronische Schaltung, zur Verbindung mit mindestens einem Ultraschalltransducer, wobei die Vorrichtung eine Speichereinheit aufweist und einen Prozessor, wobei die Speichereinheit Instruktionen speichert, die, wenn vom Prozessor ausgeführt, die Schritte des Verfahrens nach einem der Ansprüche 1 bis 10 ausführt.

12. System mit einer Vorrichtung nach Anspruch 11 und mindestens einem Ultraschalltransducer, welcher mit der Vorrichtung verbunden ist.

## Geänderte Patentansprüche

### Geänderte Patentansprüche gemäss Regel 137(2) EPÜ.

1. Verfahren zur Erkennung eines Objekts in einem Nahfeld eines Ultraschalltransducer (108), insbesondere als Einparkhilfe für ein Fahrzeug, mit den Schritten:
- Zyklische Messwerterfassung, wobei jede Messwerterfassung umfasst:
- Aussenden eines Ultraschallsignals durch einen Ultraschalltransducer (108) in einen zu überwachenden Erfassungsbereich,
- Empfangen eines von einem Objekt im Erfassungsbereich reflektierten Ultraschallsignals durch den Ultraschalltransducer (108) als Ultraschall-Empfangssignal,
- Addieren ein Auffüllsignals auf das Ultraschall-Empfangssignal, - Bestimmen einer Phasenableitung (34) des Ultraschall-Empfangssignals zumindest für einen Nahfeldbereich des Ultraschalltransducers (108),
wobei das Verfahren weiter den Schritt umfasst:
Vergleichen der Phasenableitung (34) für den Nahfeldbereich mit einer Phasenableitung (34) eines vorhergehenden Zyklus, wobei auf Grundlage des Vergleichs auf ein Objekt im Nahfeld des Ultraschalltransducer (108) geschlossen wird.

2. Verfahren nach Anspruch 1, wobei der Nahfeldbereich zumindest teilweise ein Abklingbereich des Ultraschalltransducers (108) umfasst.

3. Verfahren nach Anspruch 1 oder 2, wobei das Auffüllsignal einem Sättigungssignal (26) abzüglich der Maximalamplituden des Ultraschall-Empfangssignals entspricht.

4. Verfahren nach einem der Ansprüche 1 bis 3, wobei im Nahfeldbereich des Ultraschalltransducers (108) ein Auswertefenster definiert wird, wobei der Vergleich nur in dem Auswertefenster ermittelt wird.

5. Verfahren nach Anspruch 4, wobei Position und Breite des Auswertefensters gewählt werden in Abhängigkeit eines oder mehrere der Ausschwingzeit des Ultraschalltransducers (108), der Temperatur, dem Anregungsstrom des Ultraschalltransducers (108), der Resonatorgüte des Ultraschalltransducers (108), der Anregungsfrequenz des Ultraschalltransducers (108), der Anzahl von Pulsen der Anregung, der Anregungsdauer des Ultraschalltransducers (108).

6. Verfahren nach einem der Ansprüche 1 bis 5, wobei die Phasenableitung (34) ermittelt wird anhand von IQ-Werten des Ultraschall-Empfangssignals.

7. Verfahren nach Anspruch 6, wobei die Phasenableitung (34) *φ'*(*n*) bestimmt wird mit
*φ'*(*n*) = *I*(*n* - 1) · (*Q*(*n* - 2)) - *Q*(*n*)) - Q(n - 1) · (*I*(*n* - 2)) - *I*(*n*)), wobei n einen diskreten Zeitschritt, I die In-Phase-Werte und Q die Quadraturwerte des Ultraschall-Empfangssignals bezeichnet.

8. Verfahren nach einem der Ansprüche 1 bis 7, wobei in jeder zyklischen Messwerterfassung aus dem Ultraschall-Empfangssignal eine Hüllkurve (16) bestimmt wird.

9. Verfahren nach einem der Ansprüche 1 bis 8, wobei Vergleichen der Phasenableitung (34) für den Nahfeldbereich mit einer Phasenableitung (34) eines vorhergehenden Zyklus umfasst: Bestimmen einer Differenz zwischen den Phasenableitungen (34) und wenn die Differenz größer ist als ein vorgegebener Grenzwert, schließen auf ein Hindernis im Nahfeld des Ultraschalltransducers (108).

10. Vorrichtung (102), insbesondere mikroelektronische Schaltung, zur Verbindung mit mindestens einem Ultraschalltransducer (108), wobei die Vorrichtung (102) eine Speichereinheit (104) aufweist und einen Prozessor (106), wobei die Speichereinheit Instruktionen speichert, die, wenn vom Prozessor (106) ausgeführt, die Schritte des Verfahrens nach einem der Ansprüche 1 bis 9 ausführt.

11. System mit einer Vorrichtung (102) nach Anspruch 10 und mindestens einem Ultraschalltransducer (108), welcher mit der Vorrichtung (102) verbunden ist.
